(19) Europäisches Patentamt
European Patent Office
Office européen des brevets

(11) **EP 2 824 321 A1**

(12) **EUROPÄISCHE PATENTANMELDUNG**

(43) Veröffentlichungstag:
**14.01.2015 Patentblatt 2015/03**

(51) Int Cl.:
*F03D 7/02* (2006.01)          *H02J 7/04* (2006.01)
*H02J 7/34* (2006.01)          *H02J 9/06* (2006.01)
*H02J 7/00* (2006.01)

(21) Anmeldenummer: **13175452.5**

(22) Anmeldetag: **08.07.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Moog Unna GmbH**
**59423 Unna (DE)**

(72) Erfinder:
• **Rösmann, Tobias**
 **44263 Dortmund (DE)**

• **Schreiner, Björn**
 **58239 Schwerte (DE)**
• **Opie, Ray**
 **Orchard Park, NY New York 14127 (US)**

(74) Vertreter: **Jostarndt, Hans-Dieter**
**Jostarndt Patentanwalts-AG**
**Brüsseler Ring 51**
**52074 Aachen (DE)**

(54) **Verfahren zur Ladung eines elektrischen Notenergiespeichers**

(57)     Beschrieben und dargestellt ist ein Verfahren zur Ladung eines elektrischen Notenergiespeichers (1) eines Energieverbrauchers (2).

Ein Verfahren zur Ladung eines elektrischen Notenergiespeichers, (1) das die Alterung des Notenergiespeichers (1) berücksichtigt und minimiert, wird erfindungsgemäß dadurch realisiert, dass das Verfahren folgende Schritte umfasst:
Vorhersage des Energiebedarfs $E_B$ des Energieverbrauchers (2),
Bestimmung der Kapazität $C$ des Notenergiespeichers (1) und des Innenwiderstandes $R_i$ des Notenergiespeichers (1),
Berechnung einer Ladespannung $U_L$, wobei die Ladespannung $U_L$ derart berechnet wird, dass die in dem Notenergiespeicher (1) bei dieser Ladespannung $U_L$ gespeicherte Energie $E_C$ gerade ausreicht, um den vorhergesagten Energiebedarf $E_B$ unter Berücksichtigung von, insbesondere am Innenwiderstand $R_i$, auftretenden Verlusten, zu decken und
Laden bzw. Entladen des Notenergiespeichers (1) bis zur berechneten Ladespannung $U_L$.

Fig. 1

EP 2 824 321 A1

**Beschreibung**

Die Erfindung betrifft ein Verfahren zur Ladung eines elektrischen Notenergiespeichers eines Energieverbrauchers.

Notenergiespeicher zur Energieversorgung von Energieverbrauchern mit elektrischer Energie finden in vielen Bereichen Anwendung. In der Regel sind die mit Notenergie zu versorgenden Energieverbraucher sicherheitsrelevant. Beispiele für derartige sicherheitsrelevante Energieverbraucher sind insbesondere Motoren in Personenfahrstühlen oder das Pitchsystems in einer Windenergieanlage.

Bei Ausfall des externen Netzes, wie es zum Beispiel bei einem Gebäudebrand vorkommen kann, ist es erforderlich das Personenfahstühle ohne die vom externen Netz bereitgestellte Energie in der Lage sind zum nächstgelegenen Stockwerk zu fahren und die Türen zu öffnen, damit in dem Fahrstuhl befindliche Personen sich in Sicherheit bringen können.

Moderne Windenergieanlagen sind in der Regel mit elektrischen Pitchsystemen ausgestattet, die je Rotorblatt wenigstens einen als Pitchmotor bezeichneten Elektromotor aufweisen. Durch Rotation der Rotorblätter um ihre jeweilige Längsachse regeln derartige Pitchsysteme die Stellung der Rotorblätter zum Wind und sind häufig die einzige sichere Möglichkeit den Rotor einer Windenergieanlage zum Stillstand zu bringen. Dies geschieht dadurch, dass das Pitchsystem die Rotorblätter in die so genannte Fahnenstellung dreht und der Rotor mangels Antrieb durch den Wind zum Stillstand kommt. Die Energieversorgung des Pitchsystems erfolgt üblicherweise durch das Netz, in das die Windenergieanlage auch den erzeugten Strom einspeist. Bei Netzausfall kann sich eine Gefahrensituation beispielsweise dadurch ergeben, dass bei Zunahme des Windes die Umdrehungsgeschwindigkeit des Rotors der Windenergieanlage einen zulässigen Höchstwert überschreitet und die Windenergieanlage oder in der Nähe befindliche Personen infolgedessen Schaden nehmen könnten.

Um eine derartige Gefahrensituation auch bei Netzausfall abwenden zu können müssen die Rotorblätter auch ohne die Energieversorgung des Pitchsystems durch das externe Netz in die Fahnenstellung verfahrbar sein. Hierzu ist aus dem Stand der Technik bekannt das Pitchsystem mit einem oder mehreren Notenergiespeichern auszustatten, die bei Netzausfall die Energieversorgung des Pitchsystems und somit die Einsatzfähigkeit des Pitchsystems gewährleisten, zumindest bis die Rotorblätter in die sichere Fahnenstellung gebracht worden sind.

Ein Problem bei der Bereitstellung von elektrischer Energie durch Notenergiespeicher ist, dass Notenergiespeicher in der Regel einem Alterungsprozess unterliegen. Dies bedeutet, dass Notenergiespeicher nach einer gewissen Lebensdauer nicht mehr dieselben Leistungsparameter erfüllen, wie zu Beginn. Insbesondere die in einem Notenergiespeicher maximal speicherbare Energie sinkt mit der Zeit. Andere betroffene Leistungsparameter können die Spannung oder die maximale Leistung sein. Die Geschwindigkeit und der Umfang des Alterungsprozesses werden unter anderem bestimmt von der Umgebungstemperatur und der Spannung, mit welcher der Notenergiespeicher geladen wird.

Um die gewünschten Leistungsparameter bis zum Ende eines gewählten Zeitraumes, das heißt bis zum Ende der Lebensdauer des Notenergiespeichers, zu erfüllen und somit zum Beispiel die Sicherheit einer Windenergieanlage zu gewährleisten, werden die Notenergiespeicher im Stand der Technik derart dimensioniert, dass zu Beginn des gewählten Zeitraumes die gewünschten Leistungsparameter so weit übertroffen werden, dass zum Ende des gewählten Zeitraumes die gewünschten Leistungsparameter trotz der Abnahme durch die erfolgte Alterung noch erfüllt werden. Durch diese notwendige Überdimensionierung des Notenergiespeichers erhöhen sich die Kosten entsprechend. Bei Notenergiespeichern in Windenergieanlagen wird insbesondere der Leistungsparameter der maximal speicherbaren Energie überdimensioniert. Ferner wird der Notenergiespeicher im laufenden Betrieb der Windenergieanlage derart geladen, dass stets die zum jeweiligen Zeitpunkt maximal mögliche Energiemenge im Notenergiespeicher gespeichert ist. Dies geschieht um sicherzustellen, dass stets ausreichend Energie in den Notenergiespeichern gespeichert ist.

Damit ist es die Aufgabe der Erfindung, ein Verfahren zur Ladung eines elektrischen Notenergiespeichers anzugeben, das die Alterung des Notenergiespeichers berücksichtigt und minimiert.

Die zuvor hergeleitete und aufgezeigte Aufgabe ist ausgehend von dem eingangs beschriebenen Verfahren zur Ladung eines elektrischen Notenergiespeichers dadurch gelöst, dass das Verfahren folgende Schritte umfasst:

Vorhersage des Energiebedarfs $E_B$ des Energieverbrauchers,

Bestimmung der Kapazität C des Notenergiespeichers und des Innenwiderstandes $R_i$ des Notenergiespeichers,

Berechnung einer Ladespannung $U_L$, wobei die Ladespannung $U_L$ derart berechnet wird, dass die in dem Notenergiespeicher bei dieser Ladespannung $U_L$ gespeicherte Energie gerade ausreicht, um den vorhergesagten Energiebedarf $E_B$ unter Berücksichtigung von, insbesondere am Innenwiderstand $R_i$, auftretenden Verlusten, zu decken und

Laden bzw. Entladen des Notenergiespeichers bis zur berechneten Ladespannung $U_L$.

Der vorhergesagte Energiebedarf $E_B$ beschreibt die Energie, die der Energieverbraucher benötigt, um die in einer Notsituation, wie zum Beispiel einem Stromausfall, notwendige Arbeit zu verrichten.

Das Ergebnis der Vorhersage des Energiebedarfs $E_B$ des Verbrauchers kann in einem einfachen Fall ein absoluter Energiebetrag sein. Erfindungsgemäß kann die Vorhersage des Energiebedarfs $E_B$ auf verschiedene Weisen erfolgen. Zum Beispiel kann die Vorhersage darin bestehen, dass ein konstanter Wert für den Energiebedarf $E_B$ angenommen wird. Alternativ kann die Vorhersage auf einem Modell beruhen, dass beispielsweise eine lineare Zunahme des Energiebedarfs $E_B$ mit dem Alter des Notenergiespeichers oder des Energieverbrauchers annimmt.

Ferner kann der Zeitraum über den sich der Energiebedarf $E_B$ in einer Notsituation erstreckt in wenigstens zwei Zeitabschnitte unterteilt werden, wobei für jeden dieser Zeitabschnitte ein absoluter Energiebetrag vorhergesagt wird. Der Zeitraum über den sich der Energiebedarf $E_B$ erstreckt kann in beliebig viele Zeitabschnitte unterteilt werden, wobei für jeden Zeitabschnitt ein absoluter Energiebetrag vorhergesagt wird. Insbesondere können die Zeitabschnitte infinitesimal kurz sein. In einer weiteren Ausgestaltung der Erfindung ist das Ergebnis der Vorhersage des Energiebedarfs $E_B$ eine, insbesondere stetige, Funktion der Zeit, die zu jedem Zeitpunkt des Zeitraumes, über den sich der Energiebedarf $E_B$ erstreckt, den momentanen Energiebedarf $E_B$ angibt.

Der Energiebedarf $E_B$ entspricht der Energie, die der Energieverbraucher benötigt, um eine definierte Aufgabe zu erfüllen. Im Beispiel eines Energieverbrauchers in einem Fahrstuhl besteht die Aufgabe darin, ohne die vom externen Netz bereitgestellte Energie zum nächstgelegenen Stockwerk zu fahren und die Türen zu öffnen. Bei einer Windenergieanlage besteht die Aufgabe beispielsweise darin ein Rotorblatt oder mehrere, insbesondere alle, Rotorblätter ohne externe Energieversorgung aus dem Wind in die Fahnenstellung zu drehen.

Die Bestimmung der Kapazität $C$ des Notenergiespeichers und des Innenwiderstandes $R_i$ des Notenergiespeichers kann auf unterschiedliche Art erfolgen. Eine Methode ist das kurzzeitige Entladen des Notenergiespeichers über einen Widerstand und die Messung der Spannung und des Entladestroms. Hieraus wiederum können die Kapazität $C$ des Notenergiespeichers und der Innenwiderstandes $R_i$ des Notenergiespeichers berechnet werden. Eine alternative Methode zur Bestimmung der Kapazität $C$ des Notenergiespeichers und des Innenwiderstandes $R_i$ des Notenergiespeichers besteht darin, dass die Kapazität $C$ des Notenergiespeichers und/oder der Innenwiderstandes $R_i$ des Notenergiespeichers mit Hilfe eines Modells geschätzt werden. Ein derartiges Modell kann zum Beispiel in der Annahme bestehen, das die Kapazität $C$ des Notenergiespeichers linear mit der Zeit abnimmt und/oder der Innenwiderstand $R_i$ des Notenergiespeichers linear mit der Zeit zunimmt. Die Komplexität eines derartigen Modells kann aber auch deutlich höher sein und lineare oder nicht lineare Einflüsse einer Vielzahl von Parametern berücksichtigen, wie z. B. Anzahl der Lade-/Entladezyklen, Ladespannung $U_L$, Lade-/Entladestrom, Temperatur usw. Ein Modell, das die Temperatur berücksichtigt, kann zum Beispiel ausgehend von einem früheren Messwert für die Kapazität $C_{-1}$ des Notenergiespeichers die aktuelle Kapazität $C$ des Notenergiespeichers dadurch bestimmen, dass, gemäß eines bekannten Zusammenhangs zwischen Temperatur $T$ und Kapazität $C(T)$, die aktuelle Kapazität $C$ des Notenergiespeichers berechnet wird. Der Ausdruck "$C(T)$" bedeutet hierbei, dass die Kapazität $C$ eine Funktion der Temperatur $T$ ist. Ein solches Modell lässt sich analog für den Innenwiderstand $R_i$ des Notenergiespeichers umsetzen. Bei den beiden zuletzt genannten Modellen ist es erforderlich, dass sowohl bei der früheren Messung der Kapazität $C_{-1}$ des Notenergiespeichers bzw. des Innenwiderstandes $R_{i,-1}$ des Notenergiespeichers, als auch bei der aktuellen Bestimmung der Kapazität $C$ des Notenergiespeichers bzw. des Innenwiderstandes $R_i$ des Notenergiespeichers die Temperatur $T$ gemessen wurde. Als Temperatur $T$ kann sowohl die Temperatur des Notenergiespeichers, als auch die Temperatur innerhalb eines Gehäuses, in dem sich der Notenergiespeicher befindet, oder die Umgebungstemperatur verwendet werden. Ferner kann der Innenwiderstandes $R_i$ des Notenergiespeichers mit einem Modell und die Kapazität $C$ des Notenergiespeichers durch eine Messung bestimmt werden oder umgekehrt.

Zum Laden des Notenergiespeichers kann eine Ladeeinrichtung vorgesehen sein, die die Ladespannung $U_L$ bereitstellt. Die Ladeeinrichtung kann zum Beispiel durch einen Gleichrichter gebildet werden, der den Wechselstrom eines Versorgungsnetzes in einen Gleichstrom mit einer Spannung gleichrichtet, die der Ladespannung $U_L$ entspricht.

Falls die berechnete Ladespannung $U_L$ unter der aktuellen Spannung U des Notenergiespeichers liegt wird der Notenergiespeicher entladen. Dies kann zum Beispiel dadurch erfolgen, dass an den Notenergiespeicher lediglich die Ladespannung $U_L$ angelegt wird und der Notenergiespeicher durch Selbstentladung die gewünschte Ladespannung $U_L$ erreicht. Alternativ kann der Notenergiespeicher auch aktiv entladen werden, indem beispielsweise der Notenergiespeicher mit einem externen Widerstand belastet wird, bis die Ladespannung $U_L$ erreicht wird.

Dadurch dass die Ladespannung $U_L$ und somit die in dem Notenergiespeicher gespeicherte Energie $E_c$ an den vorhergesagten Energiebedarf $E_B$ angepasst wird, wird eine deutlich höhere Lebensdauer des Notenergiespeichers erreicht.

Erfindungsgemäß wird nämlich anstatt den Notenergiespeicher über seine gesamte Lebensdauer mit der maximalen Ladespannung $U_{L,max}$ zu laden, der Notenergiespeicher jeweils nur mit der aktuell notwendigen Ladespannung $U_L$ geladen, die in der Regel niedriger als die maximale Ladespannung $U_{L,max}$ ist. Durch die geringere Ladespannung $U_L$ im Vergleich zum Stand der Technik verlangsamen sich die Alterungsprozesse innerhalb des Notenergiespeichers, da die Alterungsprozesse wesentlich von der Höhe der Ladespannung $U_L$ abhängen. Die durch das erfindungsgemäße Verfahren gewonnene Lebensdauer kann auch genutzt werden, um den Notenergiespeicher von vornherein kleiner zu dimensionieren, das heißt insbesondere mit einer geringeren Kapazität $C$ auszustatten. Wodurch sich die Kosten für den Notenergiespeicher erheblich reduzieren.

Gemäß einer vorteilhaften Weiterbildung der Erfindung ist vorgesehen, dass der vorhergesagte Energiebedarf $E_B$ durch einen Laststromverlauf $I(t)$ und einen Lastwiderstand $R_L$ oder durch einen Laststromverlauf $I(t)$ und einen Lastspannungsverlauf $\hat{U}(t)$ oder durch einen Lastwiderstand $R_L$ und einen Lastspannungsverlauf $\hat{U}(t)$ angegeben wird.

Bei Kenntnis von zwei der drei Variablen $R_L$, $I(t)$ und $\hat{U}(t)$ kann der Energiebedarf $E_B$ berechnet werden. Der Lastwiderstand $R_L$ ist hierbei der Widerstand mit dem der Notenergiespeicher in einer Notsituation belastet wird. Der Lastwiderstand $R_L$ kann insbesondere auch zeitabhängig sein. Der Laststromverlauf $I(t)$ ist der dem Notenergiespeicher in einer Notsituation entnommene Strom. Der Laststromverlauf $I(t)$ ändert sich während einer Notsituation typischerweise ständig und kann unter bestimmten Bedingungen kurzzeitig auch negative Werte annehmen. Der Lastspannungsverlauf $\hat{U}(t)$ entspricht der Spannung des Notenergiespeichers während der Entnahme von elektrischer Energie aus dem Notenergiespeicher in einer Notsituation. Der Energiebedarf $E_B$ ergibt sich als das Zeitintegral des Produktes aus dem Lastwiderstand $R_L$ und dem Quadrat des Laststromverlaufs $I(t)$ bzw. als das Zeitintegral des Produktes aus dem Lastspannungsverlauf $\hat{U}(t)$ und dem Laststromverlauf $I(t)$ bzw. als das Zeitintegral des Quotienten aus dem Quadrat des Lastspannungsverlaufs $\hat{U}(t)$ und dem Lastwiderstand $R_L$:

$$E_B = \int_{t_0}^{t_1} R_L I^2(t)\, dt = \int_{t_0}^{t_1} \hat{U}(t)\ I\ (t)\, dt = \int_{t_0}^{t_1} \frac{\hat{U}^2(t)}{R_L}\, dt$$

Die Grenzen des Integrals sind der Startzeitpunkt $t_0$ ab dem der Energieverbraucher in einer Notsituation Energie aus dem Notenergiespeicher benötigt und der Endzeitpunkt $t_1$ ab dem der Energieverbraucher keine Energie mehr aus dem Notenergiespeicher benötigt.

Bei der Entnahme von Energie aus einem Notenergiespeicher treten stets Verluste $E_V$ auf, die im Wesentlichen auf den Innenwiderstand $R_i$ des Notenergiespeichers zurückgehen. Folglich ist die gespeicherte Energie $E_C$ gleich der Summe der Verluste $E_V$ und der entnehmbaren Energie $E_L$:

$$E_C = E_V + E_L$$

Erfindungsgemäß wird die Ladespannung $U_L$ somit derart berechnet, dass die die entnehmbare Energie $E_L$ dem Energiebedarf $E_B$ entspricht.

$$E_C - E_V = E_L \cong E_B$$

Eine vorteilhafte Ausgestaltung der Erfindung zeichnet sich dadurch aus, dass die in dem Notenergiespeicher bei der Ladespannung $U_L$ gespeicherte Energie als die Summe der Verluste am Innenwiederstand $R_i$ des Notenergiespeichers bei dem durch den vorhergesagten Energiebedarf $E_B$ gegebenen Laststromverlauf $I(t)$ und der durch den Notenergiespeicher abgegebenen elektrischen Energie $E_L$ bei diesem Laststromverlauf $I(t)$ angenommen wird.

Erfindungsgemäß wird somit zur Berechnung der Ladespannung $U_L$ davon ausgegangen, dass der Innenwiderstand $R_i$ die einzige Verlustquelle innerhalb des Notenergiespeichers ist. Das heißt es wird angenommen, dass die abgegebenen elektrischen Energie $E_L$ sich als die Differenz aus der gespeicherten Energie $E_C$ und dem Zeitintegral des Produktes des Innenwiederstands $R_i$ und dem Quadrat des Laststromverlaufs $I(t)$ ergibt:

$$E_L = E_C - E_V = E_C - \int_{t_0}^{t_1} R_i I^2(t)\, dt$$

Die Grenzen des Integrals sind wiederum der Startzeitpunkt $t_0$ ab dem der Energieverbraucher in einer Notsituation Energie aus dem Notenergiespeicher benötigt und der Endzeitpunkt $t_1$ ab dem der Energieverbraucher keine

**4**

Energie mehr aus dem Notenergiespeicher benötigt.

Gemäß einer besonders vorteilhaften Weiterbildung der Erfindung ist vorgesehen, dass der Notenergiespeicher ein Kondensator, insbesondere ein Superkondensator, ist.

Mit Kondensator bzw. Superkondensator kann im Folgenden sowohl eine einzelne Kondensatorzelle als auch eine Parallelschaltung und/oder Reihenschaltung von mehreren Kondensatorzellen gemeint sein. Die Kapazität $C$ des Kondensators bezeichnet bei mehreren miteinander verschalteten Kondensatorzellen somit die resultierende Gesamtkapazität der miteinander verschalteten Kondensatorzellen.

Ausgehend von dem Zusammenhang zwischen der bei einer Ladespannung $U_L$ in einem Kondensator gespeicherten Energie $E_C$ und der Kapazität $C$ des Kondensators

$$E_C = \frac{1}{2}CU_L^2$$

ergibt sich folgender Formel zur Bestimmung der Ladespannung:

$$U_L = \sqrt{\frac{2}{C}\left(E_B + \int_{t_0}^{t_1} R_i I^2(t)dt\right)}$$

Der Begriff Superkondensator umfasst elektrochemische Kondensatoren, die sowohl eine Doppelschichtkapazität als auch eine Pseudokapazität aufweisen. Je nachdem welche der beiden Kapazitäten überwiegt werden die Superkondensatoren in eine von drei Familien eingeordnet. Als Doppelschichtkondensatoren oder EDLC (electric double-layer capacitor) werden Superkondensatoren bezeichnet, bei denen die Doppelschichtkapazität überwiegt. Als Pseudokondensatoren werden Superkondensatoren bezeichnet, bei denen die Pseudokapazität überwiegt. Als Hybridkondensatoren werden Superkondensatoren bezeichnet, bei denen die Doppelschichtkapazität und die Pseudokapazität in etwa gleichem Maße zur Gesamtkapazität $C$ des Superkondensators beitragen.

Bei einer bevorzugten Ausgestaltung der Erfindung ist vorgesehen, dass bei der Berechnung der Ladespannung $U_L$ als die in dem Notenergiespeicher bei der Ladespannung $U_L$ gespeicherte Energie lediglich eine Teilenergie $E_T$ berücksichtigt wird, wobei die Teilenergie $E_T$ die Energiemenge ist, die der Differenz zwischen der bei der Ladespannung $U_L$ im Kondensator gespeicherten Energie und der bei einer unteren Grenzspannung $U_G$ im Kondensator gespeicherten Energie entspricht.

Aus technischen Gründen können manche Energieverbraucher keine Energie mehr aus dem Kondensator entnehmen, wenn die Spannung des Kondensators unter eine Grenzspannung $U_G$ fällt. Daher wird erfindungsgemäß der Energiebetrag $E(U_G)$, der bei Erreichen der Grenzspannung $U_G$ in dem Kondensator ungenutzt verbleibt, bei der Berechnung der Ladespannung $U_L$ nicht berücksichtigt, d. h. der Energiebetrag $E(U_G)$ wird von der bei der Ladespannung $U_L$ im Kondensator gespeicherten Energie $E(U_L)$ abgezogen. Die zur Berechnung der Ladespannung $U_L$ berücksichtigte Teilenergie $E_T$ ergibt sich somit zu:

$$E_T = E(U_L) - E(U_G) = \frac{1}{2}CU_L^2 - \frac{1}{2}CU_G^2$$

Folglich ergibt sich folgende modifizierte Formel zur Bestimmung der Ladespannung:

$$U_L = \sqrt{U_G^2 + \frac{2}{C}\left(E_B + \int_{t_0}^{t_1} R_i I^2(t)dt\right)}$$

Gemäß einer weiteren bevorzugten Ausgestaltung der Erfindung ist vorgesehen, dass zum vorhergesagten Energiebedarf $E_B$ eine Sicherheitskorrekturfunktion hinzuaddiert wird und/oder der vorhergesagte Energiebedarf $E_B$ mit einer Sicherheitskorrekturfunktion multipliziert wird. Um sicherzustellen, dass die in dem Notenergiespeicher gespeicherte Energie ausreicht, um den vorhergesagten Energiebedarf $E_B$ unter Berücksichtigung von, insbesondere am Innenwiderstand $R_i$, auftretenden Verlusten, zu decken, ist es vorteilhaft den vorhergesagten Energiebedarf $E_B$ durch eine Sicherheitskorrekturfunktion anzupassen. Durch diese Anpassung wird der vorhergesagte Energiebedarf $E_B$ insbesondere erhöht, was dazu führt, dass die berechnete Ladespannung $U_L$ ebenfalls höher ausfällt als ohne die Anpassung des vorhergesagten Energiebedarfs $E_B$ durch die Sicherheitskorrekturfunktion. Da der vorhergesagte Energiebedarf $E_B$ sowohl ein absoluter Energiebetrag als auch eine Funktion der Zeit sein kann, kann die Sicherheitskorrekturfunktion ebenfalls durch einen absoluten Wert oder eine zeitabhängige Funktion gegeben sein.

Darüber hinaus ist es vorteilhaft, wenn die berechnete Ladespannung $U_L$ um einen konstanten Wert erhöht und/oder mit einem Sicherheitsfaktor multipliziert wird.

Anstatt oder zusätzlich zur nachträglichen Anpassung des Energiebedarfs $E_B$ kann auch die Ladespannung $U_L$ nach ihrer Berechnung angepasst werden. Durch diese Anpassung wird ebenfalls sichergestellt, dass die in dem Notenergiespeicher gespeicherte Energie $E_C$ ausreicht, um den vorhergesagten Energiebedarf $E_B$ unter Berücksichtigung von, insbesondere am Innenwiderstand $R_i$, auftretenden Verlusten, zu decken.

Gemäß einer bevorzugten Weiterbildung der Erfindung ist vorgesehen, dass eine Lastmessung durchgeführt wird und der vorhergesagte Energiebedarf $E_B$ zumindest teilweise auf den Ergebnissen der Lastmessung basiert.

Eine Lastmessung bezeichnet in diesem Fall die Messung der dem Notenergiespeicher entnommenen Energie während einer Notsituation oder des normalen Betriebs des Energieverbrauchers. Unter Zuhilfenahme dieser Lastmessung lässt sich der Energiebedarf $E_B$ für eine folgende Notsituation genauer abschätzen. Die Ergebnisse der Lastmessung werden somit genutzt um den Energiebedarf $E_B$ des Energieverbrauchers zu prognostizieren. Die Vorhersage des Energiebedarfs $E_B$ kann dabei sowohl teilweise, als auch vollständig auf der Lastmessung beruhen. Im letzteren Fall wird somit angenommen, dass der Energiebedarf $E_B$ des Energieverbrauchers in einer vergangenen Notsituation im Wesentlichen dem Energiebedarf $E_B$ des Energieverbrauchers in der folgenden Notsituation entspricht.

Bei einer vorteilhaften Ausgestaltung der Erfindung ist vorgesehen, dass der Energieverbraucher einen elektrischen Motor, insbesondere einen Pitchmotor, aufweist.

Das erfindungsgemäße Verfahren ist besonders vorteilhaft für Energieverbraucher, bei denen es sehr aufwändig ist die Notenergiespeicher zu warten oder auszutauschen. Dies ist vor allem bei Pitchsystemen in Windenergieanlagen insbesondere Offshore-Windenergieanlagen der Fall.

Gemäß einer weiteren vorteilhaften Ausgestaltung der Erfindung ist vorgesehen, dass in Abhängigkeit von der berechneten Ladespannung $U_L$ und/oder von dem vorhergesagten Energiebedarf $E_B$ und/oder von der bestimmten Kapazität $C$ und/oder von dem bestimmten Innenwiderstand $R_i$ ein Statussignal ausgegeben wird.

Ein Statussignal kann zum Beispiel ein elektrisches Signal sein, dass eine Information über die berechnete Ladespannung $U_L$ enthält. Diese Information kann die berechnete Ladespannung $U_L$ selbst sein oder dass die berechnete Ladespannung $U_L$ in einen bestimmten Werteberich fällt. Das Signal kann auch optisch, das heißt elektromagnetischer Natur, oder akustisch, wie zum Beispiel ein akustisches Warnsignal, sein. Auch die Ausgabe von mehreren Statussignalen unterschiedlicher Natur liegt im Rahmen der Erfindung.

Bei einer besonders vorteilhaften Ausgestaltung der Erfindung ist vorgesehen, dass ein erstes Statussignal ausgegeben wird, wenn die berechnete Ladespannung $U_L$ nicht größer als ein erster Grenzwert ist.

Der erste Grenzwert kann zum Beispiel einen Wert darstellen, bei dessen Unterschreitung davon ausgegangen werden kann, dass der Notenergiespeicher normal funktioniert, das heißt, dass er seine bestimmungsgemäße Funktion erfüllen kann.

Bei einer vorteilhaften Weiterbildung der Erfindung ist vorgesehen, dass ein zweites Statussignal ausgegeben wird, wenn die berechnete Ladespannung $U_L$ größer als ein erster und nicht größer als ein zweiter Grenzwert ist.

Das zweite Statussignal kann insbesondere die Information beinhalten, dass der Notenergiespeicher zwar normal funktioniert, jedoch innerhalb eines bestimmten Zeitraums gewartet werden muss, um seine Funktionsfähigkeit zu bewahren.

Gemäß einer weiteren vorteilhaften Weiterbildung der Erfindung ist vorgesehen, dass ein drittes Statussignal ausgegeben wird, wenn die berechnete Ladespannung $U_L$ größer als ein zweiter und nicht größer als ein dritter Grenzwert ist.

Das dritte Statussignal kann insbesondere die Information beinhalten, dass der Notenergiespeicher noch normal funktioniert, jedoch ein Ausfall des Notenergiespeichers bevorsteht, das heißt, dass eine Reparatur oder ein Austausch des Notenergiespeichers erforderlich ist.

Im Rahmen der Erfindung hat es sich als vorteilhaft herausgestellt, wenn ein viertes Statussignal ausgegeben wird, wenn die berechnete Ladespannung $U_L$ größer als ein dritter Grenzwert ist, wobei der dritte Grenzwert eine maximal zulässige Ladespannung $U_{L,max}$ ist.

Das vierte Statussignal sagt aus, dass der Notenergiespeicher nicht in der Lage ist, seine bestimmungsgemäße Funktion zu erfüllen, da selbst bei der maximalen Ladespannung $U_{L,max}$ die in dem Notenergiespeicher gespeicherte Energie $E_C$ nicht ausreicht, um den vorhergesagten Energiebedarf $E_B$ unter Berücksichtigung von, insbesondere am Innenwiderstand $R_i$, auftretenden Verlusten, zu decken.

Gemäß einer bevorzugten Ausgestaltung der Erfindung ist vorgesehen, dass, wenn die berechnete Ladespannung $U_L$ größer als eine maximal zulässige Ladespannung $U_{L,max}$ ist, die berechnete Ladespannung $U_L$ auf die maximal zulässige Ladespannung $U_{L,max}$ reduziert wird.

Hierdurch wird erreicht, dass wenn die berechnete Ladespannung $U_L$ größer als die maximal zulässige Ladespannung $U_{L,max}$ ist, der Notenergiespeicher nicht mit der ursprünglich berechneten Ladespannung $U_L$ sondern nur mit der maximal zulässigen Ladespannung $U_{L,max}$ geladen wird. Dies ist eine Schutzfunktion, um den Notenergiespeicher vor zu hohen Spannungen zu schützen, die den Notenergiespeicher beschädigen oder sogar zerstören könnten.

In einem weiteren Aspekt betrifft die Erfindung ein Computerprogrammprodukt zur Durchführung eines erfindungsgemäßen Verfahrens. Bei diesem Computerprogrammprodukt kann es sich zum Beispiel um ein Computerprogramm handeln, welches in einer Steuerungseinheit eines Pitchsystems ausgeführt wird, wobei das Pitchsystem über die notwendigen Mittel zur Ausführung der Verfahrensschritte verfügt.

Im Einzelnen gibt es nun eine Vielzahl von Möglichkeiten, das erfindungsgemäße Verfahren zur Ladung eines elektrischen Notenergiespeichers auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt

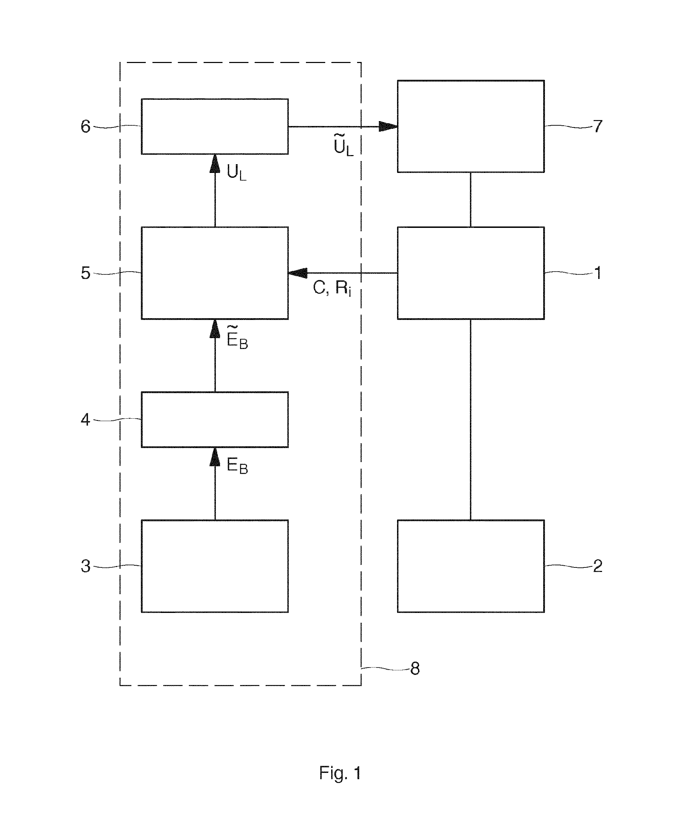

Fig. 1 schematisch den Ablauf des erfindungsgemäßen Verfahrens gemäß einem ersten Ausführungsbeispiel der Erfindung.

Dargestellt in Fig. 1 ist ein Notenergiespeicher 1 und ein Energieverbraucher 2, wobei der Notenergiespeicher 1 in einer Notsituation die Energieversorgung des Energieverbrauchers 2 übernimmt. Um den Energiebedarfs $E_B$ des Energieverbrauchers 2 vorherzusagen, ist ein Mittel 3 zur Vorhersage des Energiebedarfs $E_B$ des Energieverbrauchers 2 vorgesehen. Der von dem Mittel 3 zur Vorhersage des Energiebedarfs $E_B$ des Energieverbrauchers 2 vorhergesagte Energiebedarf $E_B$ des Energieverbrauchers 2 wird durch eine Sicherheitskorrekturfunktion 4 angepasst und der angepasste Energiebedarf $\tilde{E}_B$ wird daraufhin einem Rechenmittel 5 zugeführt. Des Weiteren erhält das Rechenmittel 5 die Kapazität $C$ des Notenergiespeichers und des Innenwiderstandes $R_i$ des Notenergiespeichers, die zuvor bestimmt wurden. Ausgehend von dem angepassten Energiebedarf $\tilde{E}_B$, der Kapazität $C$ des Notenergiespeichers und dem Innenwiderstandes $R_i$ des Notenergiespeichers berechnet das Rechenmittel 5 eine Ladespannung $U_L$, wobei die Ladespannung $U_L$ derart berechnet wird, dass die in dem Notenergiespeicher bei dieser Ladespannung $U_L$ gespeicherte Energie $E_C$ gerade ausreicht, um den angepassten Energiebedarf $\tilde{E}_B$ unter Berücksichtigung von, insbesondere am Innenwiderstand $R_i$, auftretenden Verlusten, zu decken.

Die von dem Rechenmittel 5 berechnete Ladespannung $U_L$ wird durch ein Anpassungsmittel 6 um einen konstanten Wert erhöht und/oder mit einem Sicherheitsfaktor multipliziert. Das Ergebnis dieser Anpassung ist die angepasste Ladespannung $\ddot{U}_L$. Die angepasste Ladespannung $\ddot{U}_L$ wird an eine Ladeeinrichtung 7 gemeldet. Woraufhin die Ladeeinrichtung 7 den Notenergiespeicher 1 bis zur angepassten Ladespannung $\ddot{U}_L$ lädt bzw. entlädt.

Das Mittel 3 zur Vorhersage des Energiebedarfs $E_B$ des Energieverbrauchers 2, die Sicherheitskorrekturfunktion 4, das Rechenmittel 5 und das Anpassungsmittel 6 sind vorzugsweise als eine Software ausgebildet, die innerhalb einer Steuereinheit 8 betrieben wird. Die Steuereinheit 8 kann zum Beispiel als eine speicherprogrammierbare Steuerung eines Pitchsystems einer Windenergieanlage ausgebildet sein.

*Bezugszeichenliste*

1    Notenergiespeicher

2    Energieverbraucher

3    Mittel zur Vorhersage des Energiebedarfs $E_B$ des Energieverbrauchers

4    Sicherheitskorrekturfunktion

5    Rechenmittel

6    Anpassungsmittel

7    Ladeeinrichtung

8    Steuereinheit

**Patentansprüche**

1.   Verfahren zur Ladung eines elektrischen Notenergiespeichers (1) eines Energieverbrauchers (2),
     **dadurch gekennzeichnet,**
     **dass** das Verfahren folgende Schritte umfasst:

     Vorhersage des Energiebedarfs $E_B$ des Energieverbrauchers (2),
     Bestimmung der Kapazität $C$ des Notenergiespeichers (1) und des Innenwiderstandes $R_i$ des Notenergiespei-
     chers (1),
     Berechnung einer Ladespannung $U_L$, wobei die Ladespannung $U_L$ derart berechnet wird, dass die in dem
     Notenergiespeicher (1) bei dieser Ladespannung $U_L$ gespeicherte Energie $E_C$ gerade ausreicht, um den vorhergesagten Energiebedarf $E_B$ unter Berücksichtigung von, insbesondere am Innenwiderstand $R_i$, auftretenden
     Verlusten, zu decken und
     Laden bzw. Entladen des Notenergiespeichers (1) bis zur berechneten Ladespannung $U_L$.

2.   Verfahren zur Ladung eines elektrischen Notenergiespeichers (1) nach Anspruch 1, **dadurch gekennzeichnet,**
     **dass** der vorhergesagte Energiebedarf $E_B$ durch einen Laststromverlauf $I(t)$ und einen Lastwiderstand $R_L$ oder durch
     einen Laststromverlauf $I(t)$ und einen Lastspannungsverlauf $\hat{U}(t)$ oder durch einen Lastwiderstand $R_L$ und einen
     Lastspannungsverlauf $\hat{U}(t)$ angegeben wird.

3.   Verfahren zur Ladung eines elektrischen Notenergiespeichers (1) nach Anspruch 2, **dadurch gekennzeichnet,**
     **dass** die in dem Notenergiespeicher (1) bei der Ladespannung $U_L$ gespeicherte Energie $E_C$ als die Summe der
     Verluste am Innenwiederstand $R_i$ des Notenergiespeichers (1) bei dem durch den vorhergesagten Energiebedarf
     $E_B$ gegebenen Laststromverlauf $I(t)$ und der durch den Notenergiespeicher (1) abgegebenen elektrischen Energie
     bei diesem Laststromverlauf $I(t)$ angenommen wird.

4.   Verfahren zur Ladung eines elektrischen Notenergiespeichers (1) nach einem der Ansprüche 1 bis 3, **dadurch
     gekennzeichnet, dass** der Notenergiespeicher (1) ein Kondensator, insbesondere ein Superkondensator, ist.

5.   Verfahren zur Ladung eines elektrischen Notenergiespeichers (1) nach Anspruch 4, **dadurch gekennzeichnet,**
     **dass** bei der Berechnung der Ladespannung $U_L$ als die in dem Notenergiespeicher (1) bei der Ladespannung $U_L$
     gespeicherte Energie lediglich eine Teilenergie $E_T$ berücksichtigt wird, wobei die Teilenergie $E_T$ die Energiemenge
     ist, die der Differenz zwischen der bei der Ladespannung $U_L$ im Kondensator gespeicherten Energie und der bei
     einer unteren Grenzspannung $U_G$ im Kondensator gespeicherten Energie entspricht.

6.   Verfahren zur Ladung eines elektrischen Notenergiespeichers (1) nach einem der Ansprüche 1 bis 5, **dadurch
     gekennzeichnet, dass** zum vorhergesagten Energiebedarf $E_B$ eine Sicherheitskorrekturfunktion (4) hinzuaddiert
     wird und/oder der vorhergesagte Energiebedarf $E_B$ mit einer Sicherheitskorrekturfunktion (4) multipliziert wird.

7.   Verfahren zur Ladung eines elektrischen Notenergiespeichers (1) nach einem der Ansprüche 1 bis 6, **dadurch
     gekennzeichnet, dass** die berechnete Ladespannung $U_L$ um einen konstanten Wert erhöht und/oder mit einem
     Sicherheitsfaktor multipliziert wird.

8.   Verfahren zur Ladung eines elektrischen Notenergiespeichers (1) nach einem der Ansprüche 1 bis 7, **dadurch
     gekennzeichnet, dass** eine Lastmessung durchgeführt wird und der vorhergesagte Energiebedarf $E_B$ zumindest
     teilweise auf den Ergebnissen der Lastmessung basiert.

9.   Verfahren zur Ladung eines elektrischen Notenergiespeichers (1) nach einem der Ansprüche 1 bis 8, **dadurch
     gekennzeichnet, dass** in Abhängigkeit von der berechneten Ladespannung $U_L$ und/oder von dem vorhergesagten
     Energiebedarf $E_B$ und/oder von der bestimmten Kapazität $C$ und/oder von dem bestimmten Innenwiderstand $R_i$ ein
     Statussignal ausgegeben wird.

10.  Verfahren zur Ladung eines elektrischen Notenergiespeichers (1) nach Anspruch 9, **dadurch gekennzeichnet,**

**dass** ein erstes Statussignal ausgegeben wird, wenn die berechnete Ladespannung $U_L$ nicht größer als ein erster Grenzwert ist.

11. Verfahren zur Ladung eines elektrischen Notenergiespeichers (1) nach Anspruch 9 oder 10, **dadurch gekennzeichnet, dass** ein zweites Statussignal ausgegeben wird, wenn die berechnete Ladespannung $U_L$ größer als ein erster und nicht größer als ein zweiter Grenzwert ist.

12. Verfahren zur Ladung eines elektrischen Notenergiespeichers (1) nach einem der Ansprüche 9 bis 11, **dadurch gekennzeichnet, dass** ein drittes Statussignal ausgegeben wird, wenn die berechnete Ladespannung $U_L$ größer als ein zweiter und nicht größer als ein dritter Grenzwert ist.

13. Verfahren zur Ladung eines elektrischen Notenergiespeichers (1) nach einem der Ansprüche 9 bis 12, **dadurch gekennzeichnet, dass** ein viertes Statussignal ausgegeben wird, wenn die berechnete Ladespannung $U_L$ größer als ein dritter Grenzwert ist, wobei der dritte Grenzwert eine maximal zulässige Ladespannung $U_{L,max}$ ist.

14. Verfahren zur Ladung eines elektrischen Notenergiespeichers (1) nach einem der Ansprüche 1 bis 13, **dadurch gekennzeichnet, dass**, wenn die berechnete Ladespannung $U_L$ größer als eine maximal zulässige Ladespannung $U_{L,max}$ ist, die berechnete Ladespannung $U_L$ auf die maximal zulässige Ladespannung $U_{L,max}$ reduziert wird.

15. Computerprogrammprodukt mit Programminstruktionen zur Ausführung eines Verfahrens nach einem der vorhergehenden Ansprüche.

Fig. 1

Europäisches
Patentamt

European
Patent Office

Office européen
des brevets

**EUROPÄISCHER RECHERCHENBERICHT**

Nummer der Anmeldung

EP 13 17 5452

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 247 979 A2 (ISAD ELECTRONIC SYS GMBH & CO [DE] TEMIC AUTO ELECTR MOTORS GMBH [DE]) 9. Oktober 2002 (2002-10-09) * Zusammenfassung * * Abbildungen * * Absätze [0001] - [0025] * ----- | 1-15 | INV. F03D7/02 H02J7/04 H02J7/34 H02J9/06 ADD. H02J7/00 |
| A | DE 42 38 316 A1 (MEISSNER MANFRED DIPL ING [DE]) 27. Mai 1993 (1993-05-27) * Zusammenfassung * * Abbildungen * ----- | 1 | |
| A | EP 2 550 451 A2 (MOOG UNNA GMBH [DE]) 30. Januar 2013 (2013-01-30) * Zusammenfassung * * Abbildungen 1,3,4 * ----- | 1-15 | |
| A | DE 10 2010 052272 A1 (WOBBEN ALOYS [DE]) 24. Mai 2012 (2012-05-24) * Zusammenfassung * * Abbildungen 1,2 * ----- | 1 | |
| A | DE 103 35 575 A1 (SIEMENS AG [DE]) 17. März 2005 (2005-03-17) * Zusammenfassung * * Absätze [0009] - [0018]; Abbildung 1 * ----- | 1 | RECHERCHIERTE SACHGEBIETE (IPC) F03D H02J B60L |

Der vorliegende Recherchenbericht wurde für alle Patentansprüche erstellt

| Recherchenort | Abschlußdatum der Recherche | Prüfer |
|---|---|---|
| München | 17. Januar 2014 | Hartmann, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 13 17 5452

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2014

| Im Recherchenbericht angeführtes Patentdokument | Datum der Veröffentlichung | Mitglied(er) der Patentfamilie | Datum der Veröffentlichung |
|---|---|---|---|
| EP 1247979 A2 | 09-10-2002 | DE 10116463 A1 | 10-10-2002 |
| | | EP 1247979 A2 | 09-10-2002 |
| | | US 2002140405 A1 | 03-10-2002 |
| DE 4238316 A1 | 27-05-1993 | KEINE | |
| EP 2550451 A2 | 30-01-2013 | AU 2011231625 A1 | 11-10-2012 |
| | | CA 2793747 A1 | 29-09-2011 |
| | | CN 102812238 A | 05-12-2012 |
| | | DE 102010016105 A1 | 29-09-2011 |
| | | EP 2550451 A2 | 30-01-2013 |
| | | JP 2013525657 A | 20-06-2013 |
| | | US 2013020804 A1 | 24-01-2013 |
| | | WO 2011117293 A2 | 29-09-2011 |
| DE 102010052272 A1 | 24-05-2012 | AR 083997 A1 | 17-04-2013 |
| | | AU 2011333801 A1 | 30-05-2013 |
| | | CA 2816566 A1 | 31-05-2012 |
| | | CN 103221686 A | 24-07-2013 |
| | | DE 102010052272 A1 | 24-05-2012 |
| | | EP 2643586 A1 | 02-10-2013 |
| | | KR 20130095809 A | 28-08-2013 |
| | | TW 201233896 A | 16-08-2012 |
| | | US 2013323055 A1 | 05-12-2013 |
| | | WO 2012069532 A1 | 31-05-2012 |
| DE 10335575 A1 | 17-03-2005 | KEINE | |

EPO FORM P0461

Für nähere Einzelheiten zu diesem Anhang : siehe Amtsblatt des Europäischen Patentamts, Nr.12/82